# EUROPEAN PATENT APPLICATION

(11) **EP 4 530 310 A1**
(43) Date of publication of application: **02.04.2025**
(21) Application number: 24202339.8
(22) Date of filing: 24.09.2024
(51) Int. Cl.: C08J 5/18, B32B 27/18, B32B 27/36, C08K 3/016, C08K 3/32, C08K 3/34, C08L 69/00

(54) **FLAME-RETARDANT POLYCARBONATE FILM**

(30) Priority: 26.09.2023 CN 202311260646; 19.09.2024 CN 202411312748
(71) Applicant: Illinois Tool Works Inc., Glenview IL 60025 (US)
(72) Inventor: LANG, Yuxi, Glenview, 60025 (US); SU, Run, Glenview, 60025 (US)
(74) Representative: HGF

(57) **Abstract**

The present disclosure discloses a flame-retardant PC film, comprising 75-92 parts by weight of at least one PC resin and 10-20 parts by weight of a flame retardant, wherein the flame retardant includes at least one phosphorus-containing flame retardant and at least one inorganic silicon flame retardant. The flame-retardant PC film of the present disclosure improves the oxygen index of the film by using a high molecular weight PC. The selection of at least one silicon-containing PC copolymer resin not only greatly enhances the toughness of the film but also contributes to a synergistic effect on flame retardancy to some extent. Furthermore, the flame-retardant effect is improved by mixing at least one phosphorus-containing flame retardant and at least one inorganic silicon flame retardant. In addition, for the flame-retardant PC film of the present disclosure, the mechanical performance of PC resins, such as rigidity, is also well improved, and the negative effects of a phosphorus-containing flame retardant on the heat resistance and long-term thermal aging resistance are significantly alleviated. Thus, a flame-retardant PC film with good rigidity and toughness is prepared.

## Description

### TECHNICAL FIELD

The present disclosure relates to the field of films, and in particular to a flame-retardant polycarbonate film.

### BACKGROUND

Electronic devices or components need to be wrapped in a protective case to prevent the electronic devices or components from impact during packaging and shipping. Some protective cases are required to have a small thickness, as well as good flame retardancy and transparency, so as to observe the usage status of the electronic devices or components and reduce the influence brought about by the local high temperature of the electronic devices or components, thus ensuing the normal operation of the electronic devices or components.

### SUMMARY OF THE DISCLOSURE

The present disclosure provides a flame-retardant polycarbonate (PC) film. The flame-retardant PC film is used for a protective case for protecting electronic devices or components, which not only can meet the requirement to electronic devices or components for flame retardancy, but also has good mechanical strength and transparency.

In a first aspect of the present disclosure, the present disclosure provides a flame-retardant PC film comprising 75-92 parts by weight of at least one PC resin and 10-20 parts by weight of a flame retardant. The flame retardant comprises at least one phosphorus-containing flame retardant and at least one inorganic silicon flame retardant.

According to the first aspect of present disclosure, the at least one inorganic silicon flame retardant comprises a silica inorganic compound with siloxane coating.

According to the first aspect of present disclosure, the flame-retardant PC film comprises 80-90 parts by weight of the at least one PC resin.

According to the first aspect of present disclosure, the at least one PC resin comprises 55-77 parts by weight of at least one high molecular weight PC resin and 15-25 parts by weight of at least one silicon-containing PC copolymer resin.

According to the first aspect of present disclosure, the at least one high molecular weight PC resin is at least one of an aromatic polycarbonate, an aliphatic polycarbonate, and an aromatic-aliphatic polycarbonate.

According to the first aspect of present disclosure, the at least one high molecular weight PC resin has a molecular weight of 18,000-35,000 g/mol, a melt index range of 1-5, and a glass transition temperature of 140-150°C.

According to the first aspect of present disclosure, the at least one silicon-containing PC copolymer resin has a silicon content of 5-20%.

According to the first aspect of present disclosure, the flame retardant comprises 3-7 parts by weight of at least one phosphorus-containing flame retardant and 3-7 parts by weight of at least one inorganic silicon flame retardant.

According to the first aspect of present disclosure, the at least one phosphorus-containing flame retardant comprises at least one of triphenyl phosphate, tricresyl phosphate, tobyl diphenyl phosphate, trixylenyl phosphate, tris(2,4,6-trimethylphenyl)phosphate, tris(2,4-di-tert-butylphenyl)phosphate, phenoxycyclotriphosphazene, tris(2,6-di-tert-butylphenyl)phosphate, resorcinol bis(diphenyl phosphate), hydroquinone bis(diphenyl phosphate), bisphenol A-bis(diphenyl phosphate), resorcinol bis(2,6-di-tert-butylphenyl phosphate), and hydroquinone bis(2,6-dimethylphenyl phosphate).

According to the first aspect of present disclosure, the flame retardant further comprises 0-0.2 parts by weight of at least one sulfonate flame retardant.

According to the first aspect of present disclosure, the at least one sulfonate flame retardant comprises at least one of perfluorobutane sulfonate and potassium benzenesulfonylbenzenesulfonate.

According to the first aspect of present disclosure, flame-retardant PC film further comprises 1-4 parts by weight of a toughening agent.

According to the first aspect of present disclosure, the toughening agent comprises at least one of a methyl methacrylate-butadiene-styrene copolymer, a methyl methacrylate-acrylate copolymer, an ethylene-methyl acrylate copolymer, an ethylene-butyl acrylate copolymer, an ethylene-acrylate-glycidyl methacrylate terpolymer, and a methyl methacrylate-acrylate-dimethyl siloxane copolymer.

According to the first aspect of present disclosure, the toughening agent comprises at least one of a methyl methacrylate-butadiene-styrene copolymer, a methyl methacrylate-acrylate copolymer, and a methyl methacrylate-acrylate-dimethyl siloxane copolymer.

According to the first aspect of present disclosure, the flame-retardant PC film comprises a film top layer, a film middle layer and a film bottom layer, the film top layer, the film middle layer and the film bottom layer are attached to form the flame-retardant PC film by a co-extruding process, a glue-coating and laminating process and a hot-pressing and laminating process. The film top layer, the film middle layer and the film bottom layer comprise, in total, 75 to 92 parts by weight of the at least one PC resin and 10 to 20 parts by weight of the flame retardant.

According to the first aspect of present disclosure, the film top layer and the film bottom layer contain the at least one PC resin and the flame retardants, and the film middle layer contains the at least on PC resin. The sum of the thickness of the film top layer and the film bottom layer is 50-95% of the total thickness of the flame-retardant PC film, and the thickness of the film middle layer is 5-50% of the total thickness of the flame retardant PC film.

According to the first aspect of present disclosure, the film top layer and the film bottom layer contain the at least one PC resin, and the film middle layer contains the at least on PC resin and the flame retardant. The sum of the thickness of the film top layer and the film bottom layer is 5-50% of the total thickness of the flame-retardant PC film, and the thickness of the film middle layer is 50-95% of the total thickness of the flame-retardant PC film.

In a second aspect of present disclosure, the present disclosure provides a protective case for protecting an electronic device. The protective case is made of a flame-retardant PC film according to the present disclosure.

Other features, advantages and examples of the present disclosure may be elaborated or become apparent by considering the following specific embodiments, accompanying drawings and claims. Furthermore, it should be appreciated that the contents in both the Summary of the Disclosure above and the Detailed Description of Embodiments below are exemplary, and are intended to provide a further explanation, but not to limit the scope of protection of the present disclosure. It should also be appreciated that although configurations of components are disclosed and shown in these exemplary examples, other arrangements may be within the scope of the present disclosure. However, the specific embodiments and specific examples merely indicate preferred embodiments of the present disclosure. For those skilled in the art, various variations and modifications within the spirit and scope of the present disclosure will become apparent by the way of the specific embodiments.

### BRIEF DESCRIPTION OF THE DRAWINGS

Fig. 1A shows a structural schematic diagram of an embodiment of the flame-retardant PC film of the present disclosure.
Fig. 1B shows a structural schematic diagram of another embodiment of the flame-retardant PC film of the present disclosure.
FIG. 2 shows a structural schematic diagram of an electrical apparatus comprising an embodiment of the flame-retardant PC film of the present disclosure.

### DETAILED DESCRIPTION OF EMBODIMENTS

Various specific embodiments of the present disclosure are described below with reference to the accompanying drawings which constitute part of this specification. It should be understood that although the terms for indicating directions, such as "front", "rear", "upper", "lower", "left", "right", "top", "bottom", "inner" and "outer", are used in the present disclosure to describe various exemplary structural parts and elements of the present disclosure, and these terms are used herein only for ease of illustration and are determined based on the exemplary orientations as shown in the accompanying drawing. Since the examples disclosed in the present disclosure may be arranged in various directions, these terms indicating directions are only illustrative and should not be considered as limitations.

In the present disclosure, unless otherwise specified, all equipment and raw materials are commercially available or are commonly used in the industry, and the methods in the embodiments below are conventional in the art unless otherwise stated.

PC (polycarbonate) plastic is a high-performance engineering plastic that have both good rigidity and excellent toughness. It inherently has extremely high transparency, and the rigid structure on the molecular chain leads to the good creep resistance, good dimensional stability, and good heat resistance of PC plastic. Therefore, a film made of PC plastic is well applicable to making a protective case for electronic devices or components, which can be used to protect the electronic devices or components and can make it easy to observe the electronic devices or components.

A film used for making a protective case of electronic devices or components is also required to have good flame retardancy. The inventors of the present disclosure have found that the thickness of a film has an impact on the flame-retardant performance of the film. In general, the thicker the film is, the better flame retardancy the film has. However, films having a large thickness cannot meet the development requirements of lightweight and miniaturization to electrical components. Although PC plastic itself generally has good self-extinguishing and flame retardancy (e.g., UL94 V-2 at a thickness of 3 mm), its flame retardancy cannot meet the requirement when PC plastic has a small thickness (e.g., having a thickness of 1 mm or less).

To enable films with a small thickness to meet the requirement for the flame retardancy, it is necessary to prepare flame-retardant PC films by mixing PC plastic with a flame retardant. Moreover, the inventors of the present disclosure have found that the amount of a flame retardant added to the flame-retardant PC film also has an impact on the flame-retardant performance of the flame-retardant PC film. In general, the greater the amount of the flame retardant is, the better flame retardancy the flame-retardant PC film has. However, increasing the amount of the flame retardant may lead to decreases in the mechanical performance and processability of the film, and may cause issues such as non-flatness of the film surface. In addition, in order to eliminate the environmental impact of the flame retardant, a halogen-free flame retardant should be used. However, halogen-free flame retardants are expensive, and therefore increasing the amount of the halogen-free flame retardant may increase production costs.

The present disclosure provides a flame-retardant PC film, which is obtained by adding into at least one PC resin a mixture of halogen-free flame retardants. The synergistic effect of the halogen-free flame retardants improves the flame retardancy of the flame-retardant PC film while reducing the total amount of the flame retardants and the film thickness.

A flame-retardant PC film of the present disclosure comprises at least on PC resin and a flame retardant. In the flame-retardant PC film, the at least one PC resin is present in an amount of 75-90 parts by weight, and the flame retardant is present in an amount of 10-20 parts by weight. In some embodiments, the at least one PC resin is present in an amount of 80-90 parts by weight. In some embodiments, the at least one PC resin comprises a mixture of at least one high molecular weight PC resin and at least one silicon-containing PC copolymer resin.

In the flame-retardant PC film, the at least one high molecular weight PC resin is present in an amount of 55-78 parts by weight. The at least one high molecular weight PC resin is at least one of aromatic polycarbonates, aliphatic polycarbonates, and aromatic-aliphatic polycarbonates. In some embodiments, the at least one high molecular weight PC resin has a molecular weight of 18,000-35,000 g/mol, a melt index range of 1-5, and a glass transition temperature of 140°C -150°C. In some embodiments, the at least one high molecular weight PC resin has a molecular weight of 30,000-35,000 g/mol. In some embodiments, the at least one high molecular weight PC resin is prepared by a transesterification method or a phosgene method.

In the flame-retardant PC film, the at least one silicon-containing PC copolymer resin is present in an amount of 15-25 parts by weight. The at least one silicon-containing PC copolymer resin has a silicon content of 5-20%.

The flame retardant comprises at least one phosphorus-containing flame retardant and at least one inorganic silicon flame retardant. In the flame-retardant PC film, the at least one phosphorus-containing flame retardant is present in an amount of 3-10 parts by weight, and the at least one inorganic silicon flame retardant is present in an amount of 3-10 parts by weight. In some embodiments, the flame retardant further comprises at least one sulfonate flame retardant, which is present in an amount of 0-0.2 parts by weight.

The at least one phosphorus-containing flame retardant includes conventional halogen-free phosphorus-containing flame retardants. In some embodiments, the at least one phosphorus-containing flame retardant includes at least one of triphenyl phosphate, tricresyl phosphate, tobyl diphenyl phosphate, trixylenyl phosphate, tris(2,4,6-trimethylphenyl)phosphate, tris(2,4-di-tert-butylphenyl)phosphate, phenoxycyclotriphosphazene, tris(2,6-di-tert-butylphenyl)phosphate, resorcinol bis(diphenyl phosphate), hydroquinone bis(diphenyl phosphate), bisphenol A-bis(diphenyl phosphate), resorcinol bis(2,6-di-tert-butylphenyl phosphate), and hydroquinone bis(2,6-dimethylphenyl phosphate).

The at least one inorganic silicon flame retardant may include a surface-modified silica inorganic compound. In some embodiments, the inorganic silicon flame retardant includes a silica inorganic compound with siloxane coating.

The at least one sulfonate flame retardant may include a conventional halogen-free sulfonate flame retardant. In some embodiments, the sulfonate flame retardant includes at least one of perfluorobutyl sulfonate and potassium phenylsulphonyl benzene sulfonate.

In some embodiments, the flame-retardant PC film further comprises 0-4 parts by weight of a toughening agent. The toughening agent may include a conventional toughening agent. In some embodiments, the toughening agent includes at least one of a methyl methacrylate-butadiene-styrene copolymer (MBS), a methyl methacrylate-acrylate copolymer, an ethylene-methyl acrylate copolymer, an ethylene-butyl acrylate copolymer, an ethylene-acrylate-glycidyl methacrylate terpolymer, and a methyl methacrylate-acrylate-dimethyl siloxane copolymer. In some embodiments, the toughening agent includes at least one of a methyl methacrylate-butadiene-styrene copolymer (MBS) , a methyl methacrylate-acrylate copolymer, and a methyl methacrylate-acrylate-dimethyl siloxane copolymer (Si-ACR).

In some embodiments, the flame-retardant PC film further comprises 0.3-1 part by weight of an antioxidant. The antioxidant may include a conventional antioxidant. In some embodiments, the antioxidant includes at least one of 2,6-di-tert-butyl-4-methylphenol, octadecyl β-(3,5-di-tert-butyl-4-hydroxy-phenyl) propionate, dilauryl thiodipropionate, distearyl thiodipropionate, tris(2,4-di-tert-butylphenyl) phosphite, bis(2,4-di-tert-butyl) pentaerythritol diphosphite, dioctadecyl pentaerythritol diphosphite and benzofuranone.

In some embodiments, the flame-retardant PC film further comprises 0-1 part by weight of an anti-dripping agent. The anti-dripping agent may include a conventional anti-dripping agent. In some embodiments, the anti-dripping agent includes polytetrafluoroethylene (PTFE). In some embodiments, the anti-dripping agent includes a silicon-based anti-dripping agent or an inorganic anti-dripping agent.

In a more specific embodiment, the flame-retardant PC film comprises 55-77 parts by weight of a high molecular weight PC resin, 15-25 parts by weight of a silicon-containing PC copolymer resin, 3-10 parts by weight of at least one phosphorus-containing flame retardant, 3-10 parts by weight of at least one inorganic silicon flame retardant, 0-0.2 parts by weight of at least one sulfonate flame retardant, 0-4 parts by weight of a toughening agent, 0.3-1 part by weight of an antioxidant, and 0-1 part by weight of an anti-dripping agent.

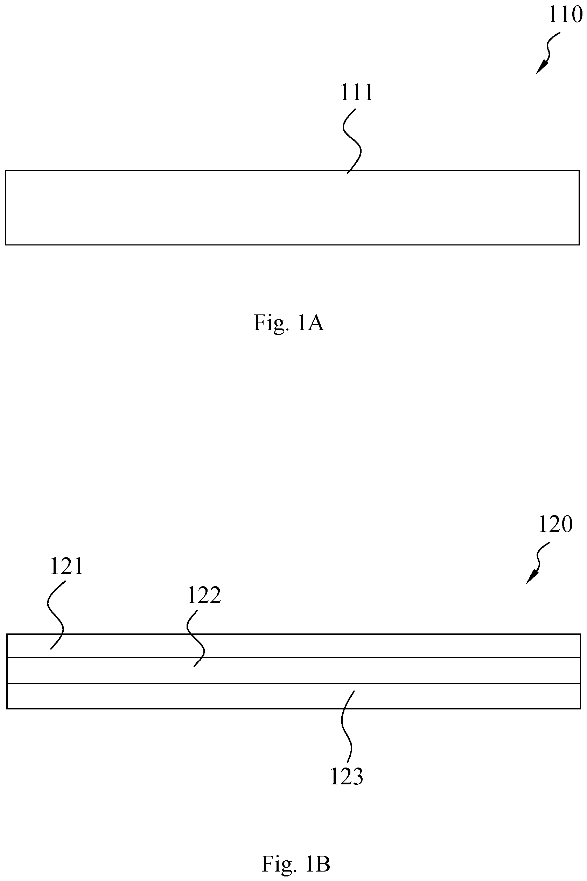

Figs. 1A and 1B show the structural schematic diagrams of two embodiments of the flame-retardant PC film of the present disclosure. The flame-retardant PC film 110 of Fig. 1A has a single layer 111. The single layer 111 comprises 75-92 parts by weight of at least one PC resin and 10-20 parts by weight of a flame retardant.

The flame-retardant PC film of Fig. 1 is prepared by a method comprising the following steps:
a. weighing the components based on their weight parts and putting them into a mixing and stirring machine for mixing;
b. blending and pelletizing the mixture obtained in step a by means of an extruder to obtain flame-retardant PC particles; and
c. drying the flame-retardant PC particles obtained in step b and then extruding the same into a film to obtain the flame-retardant PC film.

In some embodiments, the extruder is a twin-screw extruder with a barrel temperature of 250°C -280°C and a screw rotation speed of 300-700 rpm.

The PC resin substrate in the flame-retardant PC film of the present disclosure comprises suitable proportions of at least one high molecular weight PC resin and at least one silicon-containing PC copolymer resin. Compared to a substrate of low molecular weight PC resin, the PC resin substrate of the present disclosure, on the one hand, improves the melt strength during combustion, thus avoiding melt dripping, and on the other hand, improves the oxygen index of the substrate itself. In this connection, the PC substrate the present disclosure has improved flame retardancy while the mechanical performances of the PC substrate, such as rigidity, are not weakened. In addition, the silicon-containing PC copolymer resin and the flame retardant generate a synergistic effect, thereby promoting the flame-retardant effect of the flame retardant.

In addition, the flame retardant in the flame-retardant PC film of the present disclosure is obtained by mixing suitable proportions of at least one inorganic silicon flame retardant and at least one phosphorus-containing flame retardant. The flame retardancy of at least one inorganic silicon flame retardant itself might be insufficient to meet the flame-retardant requirement to the flame-retardant PC film. However, with the synergistic effects between the at least one inorganic silicon flame retardant and other flame retardants, and between a silicon-containing PC copolymer PC resin and other flame retardants, a dense oxygen-isolating protective layer can be formed on the surface of the melt when the flame-retardant PC film is burning. Therefore, the combustion progresses inwardly, rather than outwardly, thereby enabling the flame-retardant PC film to meet the flame-retardant requirement. The flame-retardant PC film of the present disclosure can achieve a V-0 flame-retardant effect at a film thickness of 0.4 mm.

The effect of the flame-retardant PC film 110 of the present disclosure is illustrated below by the flame-retardant PC film samples of Examples 1-6 according to the present disclosure and the flame-retardant PC film samples of Comparative Examples 1-4. Table 1 shows the contents of the components of the flame-retardant PC film samples of Examples 1-6 and Comparative Examples 1-4, and Table 2 shows the performance data of the flame-retardant PC film samples of Examples 1-6 and Comparative Examples 1-4.

In Examples 1-6 and Comparative Examples 1-4, the high molecular weight PC resin has a molecular weight of 30,000-35,000 g/mol and a melt index range of 1-5. The silicon-containing PC copolymer resin has a silicon content of 5% - 20%.

The phosphorus-containing flame retardant is phenoxy cyclotriphosphazene, the inorganic silicon flame retardant is a silica inorganic compound with siloxane coating, and the sulfonate flame retardant is potassium phenylsulphonyl benzene sulfonate.

The antioxidant is Irganox 168 or 1010 from Ciba.

The anti-dripping agent is polytetrafluoroethylene (PTFE).

The flame-retardant PC film samples in Examples 1-6 and Comparative Examples 1-4 are prepared by the following method:
a. weighing the materials according to the components and weight parts as shown in Table 1, and putting all the materials into a mixing and stirring machine for mixing;
b. blending and pelletizing the mixture obtained in step a by means of a twin-screw extruder to produce flame-retardant PC particles, with the barrel temperature of the extruder being 250-280°C and the screw rotation speed being 300-700 rpm; and
c. drying the flame-retardant PC particles obtained in step b and then extruding the same into a film, and cutting the film into standard test pieces of uniform thickness (e.g., 0.4 mm or 0.3 mm) for performance test.

The flame-retardant performance is tested based on the UL-94 test standard. The tensile strength is tested based on the ASTM test standard. The weight of the puncture drop dart is obtained based on the ISO 7765 test method. In addition, the flame-retardant PC film samples of Examples 1-6 and Comparative Examples 1-4 are all transparent.

**Table 1 Components and their weight parts of Examples 1-6 and Comparative Examples 1-4**

| components | material | Example | | | | | | Comparative Example | | | |
|---|---|---|---|---|---|---|---|---|---|---|---|
| | | 1 | 2 | 3 | 4 | 5 | 6 | 1 | 2 | 3 | 4 |
| PC resin | High molecular weight PC | 86.6 | 86.6 | 76.8 | 66.7 | 55.6 | 50 | | 86.8 | 86.3 | 86.3 |
| | Low molecular weight PC | | | | | | | 86.8 | | | |
| Silicon-contai ning PC copolymer resin | / | | | 15 | 20 | 25 | 25 | | | | |
| Toughening agent | MBS | 2 | | | | | | 2 | 2 | 2 | 2 |
| | Si-ACR | | 2 | | 2 | 4 | | | | | |
| Flame retardant | Phosphorus -containing flame retardant | 5 | 5 | 3 | 5 | 7 | 10 | 10 | | 5 | 10 |
| | Inorganic silicon flame retardant | 5 | 5 | 3 | 5 | 7 | 10 | | 10 | | |
| | Organic silicon flame retardant | | | | | | | | | 5 | |
| | Sulfonate flame retardant | 0.2 | 0.2 | | 0.1 | 0.2 | 0.2 | | | 0.5 | |
| Antioxidant | Irganox 168 | 0.3 | 0.3 | 0.3 | 0.3 | 0.3 | 0.3 | 0.3 | 0.3 | 0.3 | 0.3 |
| | Irganox 1010 | 0.5 | 0.5 | 0.5 | 0.5 | 0.5 | 0.5 | 0.5 | 0.5 | 0.5 | 0.5 |
| Anti-dripping agent | PTFE | 0.4 | 0.4 | 0.4 | 0.4 | 0.4 | | 0.4 | 0.4 | 0.4 | 0.4 |

**Table 2 Performance of flame-retardant PC film samples of Examples 1-6 and Comparative Examples 1-4**

| | Example | | | | | | Comparative Example | | | |
|---|---|---|---|---|---|---|---|---|---|---|
| | 1 | 2 | 3 | 4 | 5 | 6 | 1 | 2 | 3 | 4 |
| Tensile strength (MPa) | 58.13 | 57.15 | 57.98 | 55.29 | 54.29 | 55.47 | 56.97 | 63.94 | 51.96 | 56.24 |
| Elongation at break (%) | 98 | 102 | 106 | 113 | 119 | 112 | 36 | 11 | 97 | 43 |
| Bending modulus | 2893 | 2875 | 2539 | 2821 | 2892 | 2704 | 2297 | 3016 | 2286 | 2342 |
| Tensile strength after heat treatment at 140°C | 65.28 | 64.47 | 64.26 | 63.19 | 62.85 | 62.99 | Not measurable | 66.19 | Not measurable | Not measurable |
| for 7 days (MPa) | | | | | | | | | | |
| 0.3 mm flame retardancy | V-1 | V-0 - V-1 | V-0 - V-1 | V-0 | V-0 | V-0 | V-2 | No flame-retardant level | V-2 | V-2 |
| 0.4 mm flame retardancy | V-0 - V-1 | V-0 | V-0 | V-0 | V-0 | V-0 | V-2 | No flame-retardant level | V-1 | V-1 |
| weight of the puncture drop dart | 92 | 94 | 97 | 99 | 98 | 96 | 84 | 73 | 95 | 96 |

As can be seen from Table 1 and Table 2 above, the flame-retardant PC film samples of Examples 1-6 of the present disclosure all substantially meet the V-0 flame-retardant requirement at a thickness of 0.4 mm, while none of the Comparative Examples 1-4 meet the flame-retardant requirement.

Specifically, Comparative Examples 1 and 4 only comprise a phosphorus-containing flame retardant. Moreover, the PC resin in Comparative example 1 is a low molecular weight PC resin, the PC resin in Comparative Example 4 is a high molecular weight resin, and the other ingredients in Comparative Examples 1 and 4 are the same. Neither Comparative Example 1 nor Comparative Example 4 meets the flame-retardant requirement of V0, and the flame retardancy of Comparative Example 1 is even worse, indicating that the high molecular weight PC resin has slightly better flame retardancy than the low molecular weight PC resin. The flame retardant in Comparative Example 2 only comprises an inorganic silicon flame retardant, but the film sample of Comparative Example 2 has no flame retardancy, indicating that the inorganic silicon flame retardant does not have a flame-retardant effect when used alone. The flame retardant in Comparative Example 3 is obtained by mixing a phosphorus-containing flame retardant, an organic silicon flame retardant, and a sulfonate flame retardant. However, Comparative Example 3 also fails to meet the flame-retardant requirement of V0, indicating a poor synergistic effect of an organic silicon flame retardant with an phosphorus-containing flame retardant and a sulfonate flame retardant. In addition, the tensile strength after heat treatment for 7 days at 140°C of Comparative Example 1, Comparative Example 3, and Comparative Example 4 comprising a phosphorus-containing flame retardant are all not measurable, indicating a significant negative effect of the phosphorus-containing flame retardant on the heat resistance and long-term thermal aging resistance of the film.

Examples 1-6 all comprise flame retardants obtained by mixing a phosphorus-containing flame retardant and an inorganic silicon flame retardant, which all have a flame retardancy of V-0 at a thickness of 0.4 mm. This indicates that the inorganic silicon flame retardant has a synergistic effect with the phosphorus-containing flame retardant, which improves the flame retardancy of the flame-retardant PC film. In addition, the flame retardants of Examples 4 and 5 further comprise a sulfonate flame retardant, which further improves the flame-retardant performance of the film samples compared to Example 3, achieving a flame-retardant effect of V-0 at a small thickness of 0.3 mm.

Moreover, although Examples 1-6 comprise a phosphorus-containing flame retardant, they exhibit a high tensile strength after heat treatment at 140°C for 7 days. This indicates that the inorganic silicon flame retardant also has a synergistic effect with the phosphorus-containing flame retardant, which eliminates the negative effect of the phosphorus-containing flame retardant on the heat resistance and long-term thermal aging resistance of the film.

The PC resin substrates of the film samples of Examples 3-6 comprise a high molecular weight PC resin and a silicon-containing PC copolymer resin. The film samples of Examples 3-6 have a higher elongation at break compared to Examples 1 and 2, indicating that the PC resin substrate obtained by mixing a high molecular weight PC resin with a silicon-containing PC copolymer PC resin can improve the elongation at break of the film samples, resulting in better toughness. Moreover, among the film samples having a thickness of 0.3 mm, the film samples of Examples 3-6 comprising a silicon-containing PC copolymer resin have better flame retardancy, which indicates that the silicon-containing PC copolymer resin has a certain synergistic effect with the flame retardants, such that the silicon-containing PC copolymer resin has a certain promoting effect on flame retardancy.

In addition, Comparative Example 2, which uses an inorganic silicon flame retardant alone as the flame retardant, has a relatively low elongation at break, indicating that the inorganic silicon flame retardant adversely affects the mechanical performance. However, controlling the amount of the inorganic silicon flame retardant within a certain range and mixing the same with other flame retardants can improve the flame-retardant effect of the film samples without negatively affecting the mechanical performance of the film samples.

The flame-retardant PC film shown in FIG. 1B has a three-layer structure including a film top layer 121, a film middle layer 122, and a film bottom layer 123. The film top layer 121, the film middle layer 122, and the film bottom layer 123 are attached to form the flame-retardant PC film 120 by a co-extrusion process, a gluing and laminating process, or a hot-pressing and laminating process. The film top layer 121, the film middle layer 122, and the film bottom layer 123 in total include 75 to 92 parts by weight of at least one PC resin and 10 to 20 parts by weight of a flame retardant.

In some embodiments, the film top layer 121 and the film bottom layer 123 include the at least one PC resin and a flame retardant. The film middle layer 122 includes the at least on PC resin and does not include a flame retardant. In some embodiments, the sum of the thicknesses of the film top layer 121 and the film bottom layer 123 accounts for 50% to 95% of the total thickness of the flame-retardant PC film, and the thickness of the film middle layer 122 accounts for 5 to 50% of the total thickness of the flame-retardant PC film. It should be noted that the contents of the components in the film top layer 121 and the film bottom layer 123 are the same or different, as long as the total contents of the components in the film top layer 121, the film middle layer 122 and the film bottom layer 123 are as described above. The method of preparing the flame-retardant PC film 120 as shown in FIG. 1B includes the steps of:
a. weighing the components of the film top layer, the film middle layer, and the film bottom layer, respectively, according to weight parts and putting them into a mixing and stirring machine for mixing;
b. extruding each of the mixtures obtained in step a into three layers of films;
c. attaching the three layers of films obtained in step b by a co-extrusion process, a glueing and laminating process or a hot-pressing and laminating process to obtain the flame-retardant PC film 120.

The applicant found that, since at least one layer of the three-layers of the flame-retardant PC film 120 is made of at least one PC resin that does not contain a flame retardant, the flame retardant agglomerate in the layer or the two layers that contain the flame retardant. In this connection, the flame-retardant PC film 120 has a better flame-retardant efficiency or a less flame-retardant content. Furthermore, the flame-retardant PC film 120 also retains more of the properties of the PC resin compared to the flame-retardant PC film 110, which makes the flame-retardant PC film 120 have better puncture resistance.

The effects of the flame-retardant PC film 120 of the present application are illustrated below by some flam-retardant PC film samples of Examples 7-12. Table 3 illustrates the thickness of each layer in the flame-retardant PC film 120 samples of Examples 7-12 and the performance data of the flame-retardant PC film 120 samples.

In Examples 7-12, the total contents of the components in all of the layers of the flame-retardant PC film 120 are the same as those in Example 4. In Examples 7-9, the film top layer 121 and the film bottom layer 123 have the same components and include PC resin and a flame retardant (referred as "flame retardant PC" in the table), and the film layer 122 includes only PC resin. In Examples 10-12, the film top layer 121 and the film bottom layer 123 have the same components and include only PC resin, and the film middle layer 122 includes PC resin and flame retardant.

**Table 3 Thickness and property of each layer of the flame-retardant PC film samples of Examples 7-12**

| | Example 7 | | Example 8 | | Example 9 | | Example 10 | | Example 11 | | Example 12 | |
|---|---|---|---|---|---|---|---|---|---|---|---|---|
| Film top layer thickness (% ) | | 47.5 | | 37.5 | | 25 | | 25 | | 12.5 | | 2.5 |
| Film middle layer thickness ( %) | | 5 | | 25 | | 50 | | 50 | | 75 | | 95 |
| Film bottom layer thickness (%) | | 47.5 | | 37.5 | | 25 | | 25 | | 12.5 | | 2.5 |
| Tensile strength (MPa) | | 58.61 | | 57.25 | | 58.14 | | 58.09 | | 58.17 | | 58.91 |
| Elongation at break (%) | | 108 | | 112 | | 118 | | 117 | | 123 | | 109 |
| Bending mudulus | | 2876 | | 2769 | | 2752 | | 2781 | | 2804 | | 2866 |
| Tensile strength after heat treatment at 140°C for 7 days (MPa) | | 66.91 | | 65.47 | | 64.92 | | 64.87 | | 65.74 | | 65.99 |
| 0.3mm | | V-0 | | V-0 | | V-0 | | V-0 | | V-0 | | V-0 |
| flame retardancy | | | | | | | | | | | | |
| 0.4mm | | V-0 | | V-0 | | V-0 | | V-0 | | V-0 | | V-0 |
| Flame retardancy | | | | | | | | | | | | |
| weight of the puncture drop dart (g) | | 108 | | 116 | | 128 | | 128 | | 117 | | 107 |

As can be seen from Table 3 above, the flame-retardant PC film 120 of Examples 7-12 meet the flame-retardant requirement and has good mechanical properties. Furthermore, compared with the flame-retardant PC film 110 having a single layer (as shown in Example 4 in Table 2), the flame-retardant PC film 120 of having three layers has better flame-retardant effect and puncture resistance.

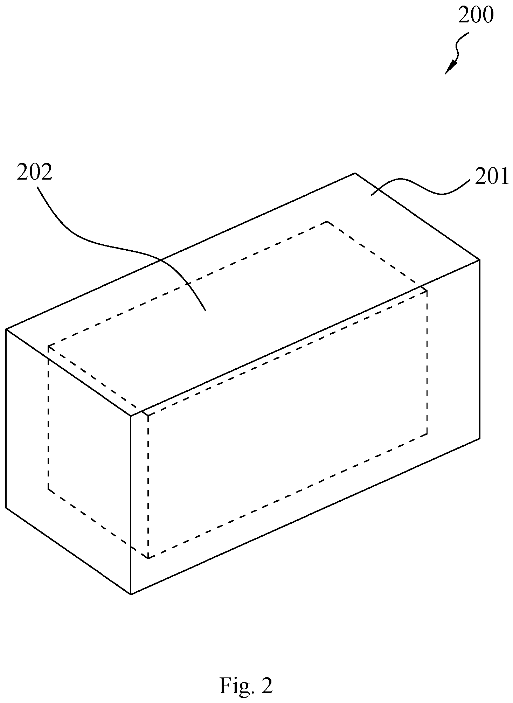

FIG. 2 shows a structural schematic diagram of an electrical apparatus comprising an embodiment of the flame-retardant PC film of the present disclosure. As shown in FIG. 2, the electrical apparatus 200 includes a protective case 201 and an electronic component 202 disposed in the protective case 201. The dashed box shows the electronic component202. The protective case 201 is made of a flame-retardant PC film sample of any of Examples 1-5. Electronic component 202 is surrounded by protective case 201, such that the protective case 201 can protect the electronic component 202.

The flame-retardant PC film of the present disclosure can be used to wrap a variety of electronic products or equipment to protect the electronic products and equipment. Such electronic products or equipment may be electronic components such as battery modules, heating coils or motors.

The flame-retardant PC film of the present disclosure uses at least one high molecular weight PC to improve the oxygen index of the film. The selection of at least one silicon-containing PC copolymer resin not only greatly enhances the toughness of the film but also contributes to a synergistic effect on flame retardancy to some extent. Furthermore, the flame-retardant effect is improved by mixing at least one phosphorus-containing flame retardant and at least on inorganic silicon flame retardant. In addition, the flame-retardant PC film of the present disclosure well improves the mechanical performance of PC resins, such as rigidity, and the negative effect of a phosphorus-containing flame retardant on the heat resistance and long-term thermal aging resistance is significantly alleviated. Thus, the flame-retardant PC film of the present disclosure has good rigidity and toughness.

The flame-retardant PC film of the present disclosure has several beneficial technical effects, and at least some of the technical effects of the flame-retardant PC film of the present disclosure are listed below:
1. The amount of a halogen-free intumescent flame retardant is reduced.
2. The insulating flame-retardant film still has excellent flame-retardant performance at a very small thickness, thus meeting the requirements of miniaturization and lightweight of electronic components and being applicable to more electronic components.
3. The flame-retardant PC film has excellent processability and can be continuously and stably produced.
4. The flame-retardant PC film has excellent mechanical performance, excellent rigidity, toughness, heat resistance, and long-term thermal aging resistance.

Although the present disclosure is described with reference to the examples of the embodiments outlined above, various alternatives, modifications, variations, improvements and/or substantial equivalents, which are known or can be anticipated at present or to be anticipated before long, may be obvious to those of at least ordinary skill in the art.

Accordingly, the examples of the embodiments of the present disclosure as set forth above are intended to be illustrative rather than limiting. Various changes may be made without departing from the spirit or scope of the present disclosure. Therefore, the present disclosure is intended to embrace all known or earlier disclosed alternatives, modifications, variations, improvements and/or substantial equivalents. The technical effects and technical problems in this specification are exemplary rather than limiting. It should be noted that the embodiments described in this specification may have other technical effects and can solve other technical problems.

Aspects of the present disclosure are provided in the following numbered clauses:
Clause 1. A flame-retardant PC film, characterized by comprising:
   75-92 parts by weight of at least one PC resin and 10-20 parts by weight of a flame retardant;
   wherein the flame retardant comprises at least one phosphorus-containing flame retardant and at least one inorganic silicon flame retardant.
Clause 2. The flame-retardant PC film according to clause 1, characterized in that
   the at least one inorganic silicon flame retardant comprises a silica inorganic compound with siloxane coating.
Clause 3. The flame-retardant PC film according to clause 1, characterized in that
   the flame-retardant PC film comprises 80-90 parts by weight of the at least one PC resin.
Clause 4. The flame-retardant PC film according to clause 1, characterized in that
   the at least one PC resin comprises 55-77 parts by weight of at least one high molecular weight PC resin and 15-25 parts by weight of at least one silicon-containing PC copolymer resin.
Clause 5. The flame-retardant PC film according to clause 4, characterized in that
   the at least one high molecular weight PC resin is at least one of an aromatic polycarbonate, an aliphatic polycarbonate, and an aromatic-aliphatic polycarbonate.
Clause 6. The flame-retardant PC film according to clause 4, characterized in that
   the at least one high molecular weight PC resin has a molecular weight of 18,000-35,000 g/mol, a melt index range of 1-5, and a glass transition temperature of 140-150°C.
Clause 7. The flame-retardant PC film according to clause 4, characterized in that
   the at least one silicon-containing PC copolymer resin has a silicon content of 5-20%.
Clause 8. The flame-retardant PC film according to clause 1, characterized in that
   the flame retardant comprises 3-7 parts by weight of at least one phosphorus-containing flame retardant and 3-7 parts by weight of at least one inorganic silicon flame retardant.
Clause 9. The flame-retardant PC film according to clause 8, characterized in that
   the at least one phosphorus-containing flame retardant comprises at least one of triphenyl phosphate, tricresyl phosphate, tobyl diphenyl phosphate, trixylenyl phosphate, tris(2,4,6-trimethylphenyl)phosphate, tris(2,4-di-tert-butylphenyl)phosphate, phenoxycyclotriphosphazene, tris(2,6-di-tert-butylphenyl)phosphate, resorcinol bis(diphenyl phosphate), hydroquinone bis(diphenyl phosphate), bisphenol A-bis(diphenyl phosphate), resorcinol bis(2,6-di-tert-butylphenyl phosphate), and hydroquinone bis(2,6-dimethylphenyl phosphate).
Clause 10. The flame-retardant PC film according to clause 1, characterized in that
   the flame retardant further comprises 0-0.2 parts by weight of at least one sulfonate flame retardant.
Clause 11. The flame-retardant PC film according to clause 10, characterized in that
   the at least one sulfonate flame retardant comprises at least one of perfluorobutane sulfonate and potassium benzenesulfonylbenzenesulfonate.
Clause 12. The flame-retardant PC film according to clause 1, characterized by further comprising:
   1-4 parts by weight of a toughening agent.
Clause 13. The flame-retardant PC film according to clause 12, characterized in that
   the toughening agent comprises at least one of a methyl methacrylate-butadiene-styrene copolymer, a methyl methacrylate-acrylate copolymer, an ethylene-methyl acrylate copolymer, an ethylene-butyl acrylate copolymer, an ethylene-acrylate-glycidyl methacrylate terpolymer, and a methyl methacrylate-acrylate-dimethyl siloxane copolymer.
Clause 14. The flame-retardant PC film according to clause 13, characterized in that
   the toughening agent comprises at least one of a methyl methacrylate-butadiene-styrene copolymer, a methyl methacrylate-acrylate copolymer, and a methyl methacrylate-acrylate-dimethyl siloxane copolymer.
Clause 15. The flame-retardant PC film according to clause 1, characterized in that
   the flame-retardant PC film comprises a film top layer, a film middle layer and a film bottom layer, the film top layer, the film middle layer and the film bottom layer are attached to form the flame-retardant PC film by a co-extruding process, a glue-coating and laminating process and a hot-pressing and laminating process;
   wherein the film top layer, the film middle layer and the film bottom layer comprise, in total, 75 to 92 parts by weight of the at least one PC resin and 10 to 20 parts by weight of the flame retardant.
Clause 16. The flame-retardant PC film according to clause 15, characterized in that
   the film top layer and the film bottom layer contain the at least one PC resin and the flame retardants, and the film middle layer contains the at least on PC resin;
   wherein the sum of the thickness of the film top layer and the film bottom layer is 50-95% of the total thickness of the flame-retardant PC film, and the thickness of the film middle layer is 5-50% of the total thickness of the flame retardant PC film.
Clause 17. The flame-retardant PC film according to clause 15, characterized in that
   the film top layer and the film bottom layer contain the at least one PC resin, and the film middle layer contains the at least on PC resin and the flame retardant;
   wherein the sum of the thickness of the film top layer and the film bottom layer is 5-50% of the total thickness of the flame-retardant PC film, and the thickness of the film middle layer is 50-95% of the total thickness of the flame-retardant PC film.
Clause 18. A protective case for protecting an electronic device, characterized in that
   the protective case is made of a flame-retardant PC film according to any one of clauses 1-14.

## Claims

1. A flame-retardant PC film, **characterized by** comprising:
75-92 parts by weight of at least one PC resin and 10-20 parts by weight of a flame retardant;
wherein the flame retardant comprises at least one phosphorus-containing flame retardant and at least one inorganic silicon flame retardant.

2. The flame-retardant PC film according to claim 1, **characterized in that**
the at least one inorganic silicon flame retardant comprises a silica inorganic compound with siloxane coating.

3. The flame-retardant PC film according to claim 1, **characterized in that**
the flame-retardant PC film comprises 80-90 parts by weight of the at least one PC resin.

4. The flame-retardant PC film according to claim 1, **characterized in that**
the at least one PC resin comprises 55-77 parts by weight of at least one high molecular weight PC resin and 15-25 parts by weight of at least one silicon-containing PC copolymer resin.

5. The flame-retardant PC film according to claim 4, **characterized in that**:
the at least one high molecular weight PC resin is at least one of an aromatic polycarbonate, an aliphatic polycarbonate, and an aromatic-aliphatic polycarbonate, or the at least one high molecular weight PC resin has a molecular weight of 18,000-35,000 g/mol, a melt index range of 1-5, and a glass transition temperature of 140-150°C, or
the at least one silicon-containing PC copolymer resin has a silicon content of 5-20%.

6. The flame-retardant PC film according to claim 1, **characterized in that**
the flame retardant comprises 3-7 parts by weight of at least one phosphorus-containing flame retardant and 3-7 parts by weight of at least one inorganic silicon flame retardant,
and wherein optionally the at least one phosphorus-containing flame retardant comprises at least one of triphenyl phosphate, tricresyl phosphate, tobyl diphenyl phosphate, trixylenyl phosphate, tris(2,4,6-trimethylphenyl)phosphate, tris(2,4-di-tert-butylphenyl)phosphate, phenoxycyclotriphosphazene, tris(2,6-di-tert-butylphenyl)phosphate, resorcinol bis(diphenyl phosphate), hydroquinone bis(diphenyl phosphate), bisphenol A-bis(diphenyl phosphate), resorcinol bis(2,6-di-tert-butylphenyl phosphate), and hydroquinone bis(2,6-dimethylphenyl phosphate).

7. The flame-retardant PC film according to claim 1, **characterized in that** the flame retardant further comprises 0-0.2 parts by weight of at least one sulfonate flame retardant.

8. The flame-retardant PC film according to claim 7, **characterized in that** the at least one sulfonate flame retardant comprises at least one of perfluorobutane sulfonate and potassium benzenesulfonylbenzenesulfonate.

9. The flame-retardant PC film according to claim 1, **characterized by** further comprising:
1-4 parts by weight of a toughening agent.

10. The flame-retardant PC film according to claim 9, **characterized in that**
the toughening agent comprises at least one of a methyl methacrylate-butadiene-styrene copolymer, a methyl methacrylate-acrylate copolymer, an ethylene-methyl acrylate copolymer, an ethylene-butyl acrylate copolymer, an ethylene-acrylate-glycidyl methacrylate terpolymer, and a methyl methacrylate-acrylate-dimethyl siloxane copolymer.

11. The flame-retardant PC film according to claim 10, **characterized in that**
the toughening agent comprises at least one of a methyl methacrylate-butadiene-styrene copolymer, a methyl methacrylate-acrylate copolymer, and a methyl methacrylate-acrylate-dimethyl siloxane copolymer.

12. The flame-retardant PC film according to claim 1, **characterized in that**
the flame-retardant PC film comprises a film top layer, a film middle layer and a film bottom layer, the film top layer, the film middle layer and the film bottom layer are attached to form the flame-retardant PC film by a co-extruding process, a glue-coating and laminating process and a hot-pressing and laminating process;
wherein the film top layer, the film middle layer and the film bottom layer comprise, in total, 75 to 92 parts by weight of the at least one PC resin and 10 to 20 parts by weight of the flame retardant.

13. The flame-retardant PC film according to claim 12, **characterized in that**
the film top layer and the film bottom layer contain the at least one PC resin and the flame retardants, and the film middle layer contains the at least on PC resin;
wherein the sum of the thickness of the film top layer and the film bottom layer is 50-95% of the total thickness of the flame-retardant PC film, and the thickness of the film middle layer is 5-50% of the total thickness of the flame retardant PC film.

14. The flame-retardant PC film according to claim 12, **characterized in that**
the film top layer and the film bottom layer contain the at least one PC resin, and the film middle layer contains the at least on PC resin and the flame retardant;
wherein the sum of the thickness of the film top layer and the film bottom layer is 5-50% of the total thickness of the flame-retardant PC film, and the thickness of the film middle layer is 50-95% of the total thickness of the flame-retardant PC film.

15. A protective case for protecting an electronic device, **characterized in that** the protective case is made of a flame-retardant PC film according to any one of claims 1-14.
